# EUROPÄISCHE PATENTSCHRIFT

(11) **EP 3 152 819 B1**
(45) Veröffentlichungstag und Bekanntmachung des Hinweises auf die Patenterteilung: **22.04.2020**
(21) Anmeldenummer: 15723022.8
(22) Anmeldetag: 18.05.2015
(51) Int. Cl.: H02K 7/00, H02K 9/193

(54) **ÖLVERTEILELEMENT**
OIL DISTRIBUTION ELEMENT
ÉLÉMENT RÉPARTITEUR D'HUILE

(30) Priorität: 04.06.2014 DE 102014107845
(43) Veröffentlichungstag der Anmeldung: 12.04.2017
(73) Patentinhaber: ThyssenKrupp Presta TecCenter AG, 9492 Eschen (LI)
(72) Erfinder: PAUL, Daniel, 09235 Burkhardtsdorf (DE); KÖTSCHAU, Christian, 09112 Chemnitz (DE)
(74) Vertreter: thyssenkrupp Intellectual Property GmbH
(86) Internationale Anmeldenummer: PCT/EP2015/060910
(87) Internationale Veröffentlichungsnummer: WO 2015/185350

(56) Entgegenhaltungen:
- EP-A1- 1 953 896
- DE-A1-102009 012 324
- DE-A1-102012 203 697
- US-A- 3 809 933

## Beschreibung

Die Erfindung betrifft eine Rotorhohlwelle für den Rotor einer elektrischen Maschine, aufweisend einen beidseitig von Stirnflanschen abgeschlossenen Zylindermantel, der einen Wellenhohlraum umgibt, wobei sich an den Stirnflanschen jeweils ein Wellenzapfen befindet und wobei in einem der Stirnflansche insbesondere im Wellenzapfen ein Einlass vorgesehen ist, über den eine Kühlflüssigkeit in den Wellenhohlraum und an die Innenfläche des Zylindermantels gelangt.

### STAND DER TECHNIK

Aus dem Stand der Technik ist eine Vielzahl solcher Rotoren für elektrische Maschinen mit darauf angeordneten Blechen, die meist zu Paketen zusammengefasst sind, bekannt. Sie werden beispielsweise in Asynchronmaschinen und in permanent erregten Synchronmaschinen eingesetzt. Alle elektrischen Maschinen werden im Betrieb wegen der elektromagnetischen Aktivität im Rotor und durch den stattfindenden Wärmeübergang auf andere gewichtsoptimierte Trägerbauteile stark erwärmt. Aus dem Stand der Technik sind verschiedene Konzepte von Flüssigkeitskühlungen bekannt, um die Erwärmung zu begrenzen. Dabei gehen die bekannten Kühlungen mit einem spezifischen Rotordesign einher, das sich beispielsweise spezieller Kühlmittelleitstrukturen bedient. Auch andere Konzepte bedürfen einer Vielzahl an Zusatzkomponenten, die nicht nur das Design des Rotors sondern auch das der Maschine und der Schnittstellenkomponenten beeinflussen.

Es sind auch verschiedene Lösungen zur Leitung und Verteilung des Kühlmediums hin zur Wärmeübertragungsfläche bekannt, die meist eine vollständige, über die gesamte axiale und radiale Wegstrecke als Zwangsführung ausgelegte Leitung des Kühlmittels in Kanälen oder Bohrungen aufweisen. Derartige Zwangsführungen bedingen durch den Strömungswiderstand einen hohen Druckverlust, so dass Kühlmittelpumpen notwendig werden, insbesondere wenn eine Flussrichtung entgegen der Zentrifugalkraft enthalten ist. Zudem ist die Umsetzung dieser Konzepte wegen der Vielzahl an Bohrungen, insbesondere Axiallochbohren, besonders aufwendig.

Bestimmte Arten der Kühlung, wie sie beispielsweise in DE 11 2010 004 773 gezeigt sind, integrieren zusätzliche Komponenten in den Rotor, die jedoch einer zusätzlichen Lagerung und Abdichtung bedürfen. Weiterhin sind beispielsweise aus CH 337267 auch elektrische Maschinen mit Hohlwellen bekannt, bei denen der gesamte Hohlraum des Rotors mit der Flüssigkeit gefüllt werden muss, um eine ausreichende Interaktion der Kühlflüssigkeit mit dem Rotormantel und einen guten Wärmeübergang zu erreichen. Es hat sich allerdings herausgestellt, dass sich auf diese Weise keine ausreichende Wärmemenge abführen lässt.

Letztendlich haben alle bekannten Kühleinrichtungen einen der folgenden Nachteile: Entweder werden zur Reduzierung des Volumenbedarfs zu geringe Querschnitte der für das Kühlmittel vorgesehenen Leitungen gewählt. Allerdings reduzieren solch kleinen Durchgangsbohrungen kaum das Gewicht der zu kühlenden Rotorwelle. Zudem kann das Kühlmittel wegen der ohnehin kleinen Flächen nur in geringem Maße an die zu kühlenden Bauteile insbesondere an das sich besonders erwärmende Blechpaket herangeführt werden. Das Kühlmittel benetzt oft nur kleine Flächen an der erwärmten Oberfläche und es kommt zu keiner großflächigen Verteilung über den gesamten Umfang.

Auf der anderen Seite können mit großen Leitungsquerschnitten und Hohlräumen in der Rotorwelle nicht nur eine große Oberfläche zur Wärmeübertragung sondern auch eine besonders leichte Bauweise realisiert werden. Allerdings ist es in dem Fall nachteilig, dass der Hohlzylinder im Betrieb nahezu vollständig mit Kühlmittel angefüllt werden muss, was den Kühlmittelbedarf erhöht und wiederum zur Zunahme der bewegten Masse führt, die durch die Leichtbauweise gerade vermieden werden sollte.

Eine Rotorwelle ist ferner aus der US 3 809 933 A bekannt geworden. Hier wird eine Rotorwelle bestehend aus Zylindern beschrieben, welche einen Hohlraum ausbildet, in den eine Kühlflüssigkeit eingebracht wird. Diese Kühlflüssigkeit verlässt die Zuführleitung über einen Auslass und trifft auf ein trichterförmiges Verteilelement.

Die EP 1 953 896 A1 beschreibt eine Rotorhohlwelle, wobei die aus den Autrittsöffnungen austretende Kühlflüssigkeit den Stator benetzt. Eine trichterförmige Ableitfläche eines Verteilelementes ist hieraus nicht bekannt geworden.

Eine elektrische Maschine, umfassend einen Stator, einen um eine Drehachse drehbar gelagerten Rotor, der im Betrieb der elektrischen Maschine mit dem Stator magnetisch zusammenwirkt, eine Welle, auf der der Rotor befestigt ist und die eine axiale Bohrung aufweist, ein Zuflusselement, das sich so in die axiale Bohrung erstreckt, dass ein Kühlmittel aus dem Zuflusselement in die axiale Bohrung fließen kann, ist aus der DE 10 2012 203 697 A1 bekannt geworden.

Eine Rotorwelle mit trichterförmigem Verteilelement ist aus DE 10 2009 012324 A1 bekannt.

Der vorgenannte Stand der Technik beschäftigt sich insbesondere mit der Kühlung einer elektrischen Maschine, insbesondere einer Rotorhohlwelle. Wenngleich hier bereits effektive Kühlkonzepte bekannt sind, besteht an dieser Stelle weiterer Verbesserungsbedarf.

### DIE ERFINDUNG

Aufgabe der vorliegenden Erfindung ist es daher, eine einfach aufgebaute und kostengünstig zu fertigenden Rotorhohlwelle für den Rotor einer elektrischen Maschine zu schaffen, die eine besonders effiziente Kühlung ermöglicht. Zudem ist es die Aufgabe, einen entsprechenden Rotor vorzuschlagen.

Diese Aufgaben werden durch die Rotorhohlwelle nach Anspruch 1, den Rotor nach Anspruch 10 und die elektrische Maschine nach Anspruch 11 gelöst. Vorteilhafte Ausführungsformen sind in den Unteransprüchen beschrieben.

Entsprechend der Ansprüche liegt ein Aspekt der Erfindung in dem besonderen Verteilelement, das im großvolumigen zylindrischen Hohlraum der Welle angeordnet ist. Zudem führt das Verteilelement zu einer effizienten und umfänglich gleichverteilten Beaufschlagung der Innenfläche des den Hohlraum umgebenden Zylindermantels mit einer verhältnismäßig kleinen aber ausreichenden Menge an durchfließender Kühlflüssigkeit. Dabei wird als großvolumiger Hohlraum ein solcher erachtet, bei dem das Verhältnis vom Durchmesser des Wellenraumes zum Durchmesser des Wellenzapfens (insbesondere dem Durchmesser des Lagers) größer als 1,5 insbesondere größer als 2 ist. Mit dem erfindungsgemäßen Verteilelement kommt es zu einer Durchleitung der Kühlflüssigkeit und zu deren optimalen Interaktion mit der Innenfläche, so dass eine besonders effiziente Kühlung des Rotors stattfindet. Erfindungsgemäß findet somit keine vollständige Spülung sondern lediglich eine Benetzung der zu kühlenden Oberfläche mit Kühlflüssigkeit statt.

Wegen der geringeren Temperaturen kann gerade bei definierter Bauteilgrenztemperatur eine höhere Leistung des Rotors erreicht werden, so dass sich ein verbessertes Leistungsgewicht respektive Leistungsvolumen der elektrischen Maschine ergibt. Mit der Erfindung ist somit eine leichtbauorientierte Konzeption des Rotors bei geringem Kühlmitteleinsatz und besonders effizienter Kühlung möglich. Dabei ist es besonders vorteilhaft, dass die zu rotierende Masse trotz des Kühlmittelinhaltes gering bleibt.

Anspruchgemäß hat die Rotorhohlwelle einen beidseitig von Stirnflanschen abgeschlossenen Zylindermantel, der den Wellenhohlraum umgibt. An jedem der Stirnflansche ist jeweils ein Wellenzapfen ausgebildet, wobei in einem Wellenzapfen eine Durchgangsbohrung als Einlass vorgesehen ist. Über diesen Einlass besteht Zugang zum Wellenhohlraum, so dass in den Einlass eingeleitete Kühlflüssigkeit in den Wellenhohlraum und damit an die Innenfläche des Zylindermantels gelangt. Unmittelbar hinter dem Einlass ist das Verteilelement im Wellenhohlraum angeordnet, das die über den Einlass eintretende Kühlflüssigkeit aufnimmt und an die vorgesehene Stelle verteilt. Dazu hat das Verteilelement eine Ableitfläche, die zur Vermeidung von Unwuchten insbesondere rotationssymmetrisch ist und mit der die Kühlflüssigkeit mit einer radialen Komponente nach Außen in Richtung der Innenfläche des Zylindermantels geführt und letztendlich über einen Mündungsbereich auf die Innenfläche abgegeben wird. Dabei wird die kinetische Energie des Rotors zum Transport des Kühlmediums verwendet. So verläuft der Kühlmitteltransport von der Zentrifugalkraft getrieben von der Rotorachse hin zum Ort des Wärmeaustauschs. Die Abfuhr des Kühlmittels kann durch Öffnungen erfolgen, die im Zylindermantel oder im Außenbereich der Stirnflansche vorgesehen sind.

Ein besonderer Vorteil des Verteilelementes ist, dass am gebauten Rotor nur geringfügige bauliche Veränderungen vorgenommen werden müssen, um das Kühlungskonzept zu realisieren. Das zusätzliche Verteilelement kann über eine einfache Anschlussgeometrie mit dem Rotor und den Zuleitungen verbunden werden, so dass ein einfacher Kühlsystemaufbau mit einer minimalen Anzahl an Zusatzkomponenten gegeben ist. Besonders vorteilhaft lässt sich die Erfindung bei mehrteiligen, gebauten Leichtbaurotorwellen umsetzen.

Erfindungsgemäß wird mit einer geringen Menge Kühlmittel und entsprechend kleinem Volumenstrom nur so viel von dem gesamten Wellenhohlraum durchströmt, dass lediglich die für den Wärmeaustausch wesentliche Innenmantelfläche des Wellenhohlraums benetzt wird. Dabei findet eine vollumfängliche Kühlmittelbenetzung bereits bei Auftreffen des Kühlmittels auf die zu kühlende Oberfläche statt. Das flüssige Kühlmittel und dessen direkte Benetzung der Wand am Ort der Wärmeentstehung tragen damit zu einer optimalen Wärmeabfuhr trotz geringer Kühlmittelmenge bei. Wegen der geringen Kühlmittelmenge kommt es entsprechend nur zu einer minimalen Zunahme der bewegten Massen und damit des Trägheitsmoments.

Mit den gekühlten Komponenten kann die Leistung der elektrischen Maschine somit zusätzlich erhöht und der Einfluss der Kühlung auf das Beschleunigungsverhalten minimiert werden. Ein weiterer Vorteil liegt darin, dass die erfindungsgemäße Flüssigkeitskühlung nur mit unwesentlichen baulichen Veränderungen am Rotor einhergeht und sogar als Baukastenlösung mit minimalem Zusatzaufwand realisiert werden kann.

Die erwähnten Vorteile sind besonders ausgeprägt, wenn die rotationssymmetrische Ableitfläche des Verteilelementes einen konischen Trichter mit glatter Innenfläche ausbildet, wobei sich der Öffnungswinkel des Trichters in den Wellenhohlraum hinein öffnet. Dabei kann die Innenfläche gerade oder derart gewölbt sein, dass sich der Öffnungswinkel in den Wellenhohlraum hinein immer weiter vergrößert. Um die beabsichtigte Kühlfunktion mit einer gleichmäßigen Verteilung des Kühlmittels sicher gewährleisten zu können, ist es vorteilhaft, wenn der Radius der Trichtermündung, über die die Kühlflüssigkeit auf die Innenwand des Zylindermantels gelangt, größer als zumindest die Hälfte des Innenradius des Zylindermantels ist.

Dabei ist es im Hinblick auf einen guten Übertrag der Kühlflüssigkeit auf die Innenwand des Zylindermantels und auf eine gleichmäßige Verteilung der Kühlflüssigkeit besonders vorteilhaft, wenn der Mündungsbereich der Ableitfläche, also insbesondere die Trichtermündung, einen geringen Abstand zur Innenfläche des Zylindermantels aufweist. Zur Überbrückung des Abstands sind Distanzstücke vorgesehen, an denen die Kühlflüssigkeit entlang auf die Innenfläche des Zylindermantels laufen kann. Idealerweise sind die Distanzstücke über den Umfang der Trichtermündung symmetrisch verteilt. Es ist erfindungsgemäß vorgesehen, dass die Distanzstücke an der Innenfläche des Zylindermantels anliegen.

In einer besonders einfach aufgebauten und gewichtsreduzierten Ausführungsform ist die Ableitfläche aus einem dünnwandigem Material, insbesondere aus einem Kunststoff oder einem Blech, gefertigt, wobei die Distanzstücke entsprechend an den Mündungsbereich angeformt oder daraus ausgeschnitten sind.

Damit sich die Kühlflüssigkeit nach dem Auftreffen auf die Innenfläche des Zylindermantels gleichmäßig in beide Richtungen verteilt, ist vorgesehen, dass der Mündungsbereich der Ableitfläche sich etwa in der Mitte der axialen Ausdehnung der Innenfläche befindet. Die an dieser Stelle abgegebene Kühlflüssigkeit verteilt sich bei drehender Rotorhohlwelle nach beiden Seiten nahezu homogen über die Innenfläche. Eventuelle Inhomogenitäten können über eine geringfügige Veränderung der Lage ausgeglichen werden.

Im einfachsten Fall wird die Kühlflüssigkeit der Ableitfläche über einen zentralen im Wellenzapfen eingebrachten Einlass zugeführt. Dabei kann der Halsstutzen des Trichters, der in die Ableitfläche mündet, unmittelbar die Weite des Einlass definieren. Die als Trichter ausgebildete Ableitfläche kann mit ihrem Halsstutzen unmittelbar in eine den Einlass umgebende Aufnahme eingepasst sein.

Der Einlass kann aber in einer anderen vorteilhaften Ausführungsform mehrere über den Umfang des Wellenzapfens gleich verteilte Einlasskanäle aufweisen, die im Halsstutzen münden. Die über solche Kanäle in separaten Strömen zugeführte Kühlflüssigkeit wird dann durch die Rotation und die daraus folgende Zentrifugalkraft auf der Ableitfläche homogenisiert. In dieser Ausführungsform lässt sich neben der erfindungsgemäßen Kühlung ein weiterer separater Medientransport durch den Rotor realisieren. Für diesen ist innerhalb der Rotorhohlwelle ein Duchleitungselement, insbesondere in Form eines Rohrstücks, vorgesehen, das den Hohlraum von einem Wellenzapfen zum anderen durchragt. Damit ergibt sich eine kombinierte Anordnung zur rotorintegrierten Kühlung bei separatem Medientransport durch die Rotorwelle. Beide Medienströme können getrennt ein- und ausgeleitet werden und sind daher auch für verschiedene Betriebszustände zu- und abschaltbar.

Wie dargelegt, kann die Abfuhr des Kühlmittels durch Öffnungen im Zylindermantel oder in den Stirnflanschen erfolgen. Besonders vorteilhaft ist es jedoch, die im Wellenhohlraum befindliche und abzuführende Kühlflüssigkeit zu nutzen, um die den Rotor umgebenden Statorspulen zu kühlen. Dazu sind in der Innenfläche des Zylindermantels am Ende des Flusses Austrittsöffnungen vorgesehen, aus denen die Kühlflüssigkeit bei drehender Rotorhohlwelle in radialer Richtung herausgeschleudert wird und am Rotor vorbei den umgebenden Stator benetzt. Um eine gleichmäßige Benetzung zu erreichen, ist es vorteilhaft, wenn die Austrittsöffnungen in den Randbereichen des Zylindermantels jeweils über den Umfang gleichverteilt angeordnet sind.

Über die Anzahl und den Durchmesser der einzelnen Einlasskanäle sowie die Anzahl und Durchmesser der radial auf dem Umfang verteilten Austrittsöffnungen kann der Kühlmittelstrom und die vorhandene Kühlmittelmenge im Rotor eingestellt und folglich die Kühlleistung geregelt werden.

Zusammenfassend ist die erfindungsgemäße Rotorwelle mehrteilig und hohlzylindrisch gebaut. Mit dieser Bauweise wird eine große Innenoberfläche zur Wärmeübertragung an die Kühlflüssigkeit realisiert. Dabei verfügt der Rotor an einer Stirnseite über eine, unter Umständen aus mehreren Zuleitungen bestehende, Kühlflüssigkeitszuführung, die als zentrische Axialbohrung eines Bauteils, welches Teil der Rotorwelle ist, ausgebildet sein kann. Die Zuleitung mündet in das Verteilelement, das unmittelbar mit der radialen Aufweitung des hohlzylindrischen Bereiches der Rotorwelle beginnt. Durch diese Anordnung wird eine sprungartige, massive Querschnittsvergrößerung, wie typisch für eine Leichtbaurotorauslegung, überbrückt. Nach der Übergabe der Kühlflüssigkeit an das Verteilelement wird die Kühlflüssigkeit infolge der Rotation des Rotors und der daraus resultierenden Zentrifugalkraft sowie der Druckdifferenz zwischen Kühlmittelkreislauf und Rotorumgebung auf die Innenmantelfläche des Rohrs des gebauten Rotors geleitet. Die Kühlflüssigkeit trifft hierbei nahezu mittig auf die Innenoberfläche des zylinderförmigen Wellenhohlraumes auf. Diese mittige Einleitung des Mediums sowie dessen umfängliche Verteilung während der Fließstrecke vom Kühlmitteleintritt zur Abgabe an die Innenoberfläche sind die Aufgaben des Kühlmittelverteilelementes. Aufgrund des nachströmenden Kühlmittels und der Zentrifugalkräfte bildet sich im Folgenden eine Verteilung der Strömung aus, die das Kühlmittel beidseitig axial nach außen führt. Dabei sind Anzahl und Durchmesser der Kühlmittelzuleitungen so zu konzipieren, dass eine effiziente Kühlung, bei einem möglichst geringem Energie- und Volumenverbrauch des Kühlmittels, erzielt wird. Das Kühlmittelverteilelement ist hierbei kraft-, stoff- oder formschlüssig mit dem Zuleitungselement verbunden.

Die sprungartige Querschnittsvergrößerung innerhalb der Hohlwelle garantiert eine besonders leichte Bauweise und eine enorme Zunahme der zur Wärmeübertragung zur Verfügung stehenden Fläche. Vorteilhaft ist, dass die Kühlflüssigkeit gezielt an die Innenoberfläche des zylinderförmigen Wellenhohlraumes geleitet wird und dort in besonderer Nähe am aktiven, zu kühlenden Blechpaket entlang strömen kann. Ersichtlich ist nicht der gesamte Hohlraum mit Kühlmittel gefüllt, sondern nur die Innenmantelfläche mit einem Kühlmittelfilm vollumfänglich beaufschlagt. Die Verteilung des Kühlmittels geschieht mit Hilfe der Zentrifugalkraft. Dieser konzentrierte, gezielte und mit geringen Volumenströmen realisierte Einsatz des Kühlmittels reduziert die rotatorisch zu bewegenden Massen bei gleichzeitig optimaler Kühlung der zu kühlenden Bereiche.

Durch die unmittelbare Übergabe der Kühlflüssigkeit an das Verteilelement bei Eintritt in den großen Hohlzylinderraum wird eine auf das minimal erforderliche Maß reduzierte Zwangsführung des Kühlmittels erreicht. Dies reduziert die Druckverluste und die Strömungswiderstände. Dadurch kann die Verwendung einer Kühlmittelpumpe vermieden werden. Darüber hinaus vereinfacht die axial unmittelbare Übergabe des Kühlmittels die Gestaltung der Kühlmittelzuleitung und reduziert den Fertigungsaufwand. Ab der Übergabe strömt das Kühlmittel frei über das Kühlmittelverteilelement und wird auf dem Fließweg bis zum mittigen Auftreffen auf die Innenoberfläche des Rohres schon zum Großteil in Umfangsrichtung verteilt. Somit trifft das Kühlmittel nicht lokal durch in Anzahl und Ausprägung begrenzte Austrittsöffnungen sondern annähernd vollumfänglich auf die Innenoberfläche auf und es kann sich eine gleichmäßige Kühlmittelströmung auf der Oberfläche ausbilden. Dies begünstigt den Wärmeübergang an respektive von der zu kühlenden Oberfläche.

### BEVORZUGTE AUSFÜHRUNGSBEISPIELE DER ERFINDUNG

Ausführungsformen des erfindungsgemäß ausgestatteten Rotors werden nachfolgend anhand der Figuren näher erläutert. Dabei zeigt:
- **Figur 1**: eine rotorintegrierten Kühlung und
- **Figur 2**: eine rotorintegrierte Kühlung mit separatem Medientransport.

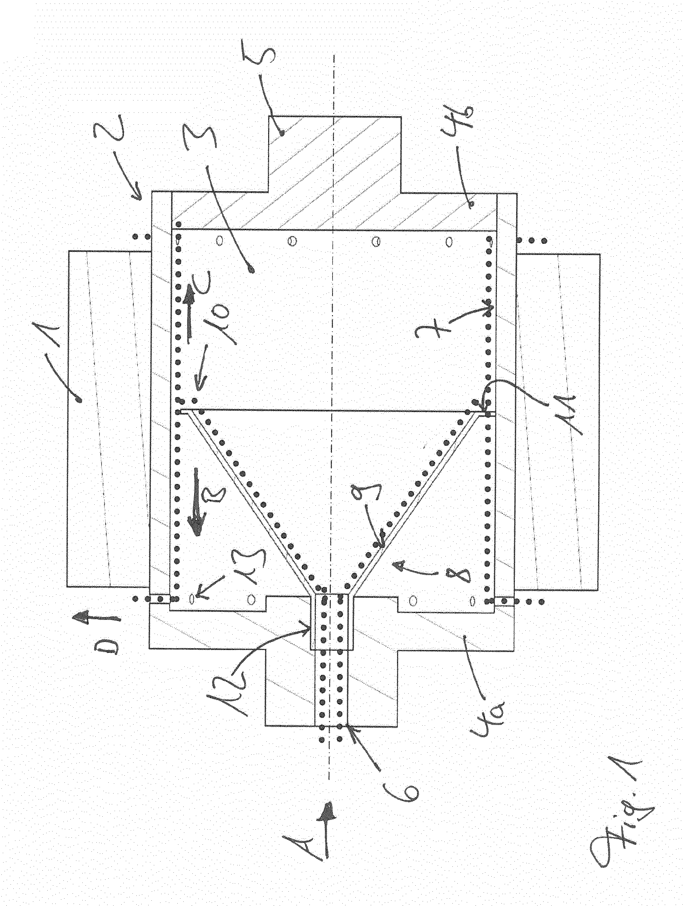

In Figur 1 ist zunächst ein Rotor für eine elektrische Maschine, insbesondere für einen Asynchronmotor oder eine permanent erregte Synchronmaschine, gezeigt, der eine mit Blechpaketen 1 bestückte Rotorhohlwelle aufweist. Die Rotorhohlwelle wird von einem Zylindermantel 2 gebildet, der einen Wellenhohlraum 3 umgibt und beidseitig von Stirnflanschen 4 abgeschlossenen ist. Im vorliegenden Fall ist der eine Stirnflansch 4a an den Zylindermantel 1 angeformt, während der andere Stirnflansch 4b in den Zylindermantel 1 eingepasst ist. An beiden Stirnflanschen 4 ist jeweils ein Wellenzapfen 5 vorgesehen, der angeformt oder als separates Bauteil daran befestigt ist. In einem der Wellenzapfen 5 ist ein Einlass 6 vorgesehen ist, über den eine Kühlflüssigkeit (Punkte) in Richtung des Pfeils A in den Wellenhohlraum 3 und an die Innenfläche 7 des Zylindermantels gelangt.

Im Wellenhohlraum 3 ist ein Verteilelement 8 angeordnet, das die über den Einlass 6 eintretende Kühlflüssigkeit aufnimmt und über eine insbesondere rotationssymmetrische Ableitfläche 9 in Richtung der Innenfläche 7 des Zylindermantels führt. Über einen Mündungsbereich 10 der Ableitfläche 9 wird die Kühlflüssigkeit auf die Innenfläche 7 abgegeben. Im vorliegenden Fall ist die Ableitfläche als dünnwandiger konischer Trichter mit glatter gerader Innenfläche ausbildet, der sich mit einem Öffnungswinkel in den Wellenhohlraum 3 hinein öffnet und mit der Trichtermündung 10 in nur kleiner Distanz vom Innenradius des Zylindermantels beabstandet ist. Der verbleibende Abstand ist durch angeformte Distanzstücke 11 überbrückt, an denen die Kühlflüssigkeit abläuft, um sich in beide Richtungen (Pfeile B, C) homogen zu verteilen. Die Distanzstücke 11 berühren die Innenfläche 7. Das trichterförmige Verteilelement 8 ist mit seinem Hals 12 in eine entsprechende Aufnahme im Stirnflansch 5 eingepasst.

Im Zylindermantel 2 sind Austrittsöffnungen 13 vorgesehen, aus denen die Kühlflüssigkeit bei drehender Rotorhohlwelle in radialer Richtung (Pfeil D) austritt und den umgebenden Stator benetzt. Die Austrittsöffnungen 13 sind in beiden Randbereichen des Zylindermantels 2 jeweils über den Umfang gleichverteilt und sorgen für die Abführung der erwärmten Kühlflüssigkeit. Die Austrittsöffnungen 13 des einen Randbereiches sind gegenüber den Austrittsöffnungen des anderen Randbereiches über den Umfang versetzt auf der Winkelhalbierenden angeordnet, um bei jeder Winkelstellung des Rotors den Abfluss des Restöls zu ermöglichen. Durch den vollständigen Ablauf wird insbesondere eine Unwucht des Rotors beim Anfahren vermieden. Durch die Ausleitung der Kühlflüssigkeit resultiert in direkter Umgebung um den Rotor- und Stator ein Luft/Kühlflüssigkeitsgemisch, das zusätzlich zu einer Kühlung des Rotors und des Stators führt. Durch diesen Effekt kann durch Anspritzen eine aktive Kühlung der Stator-Wickelköpfe erreicht werden.

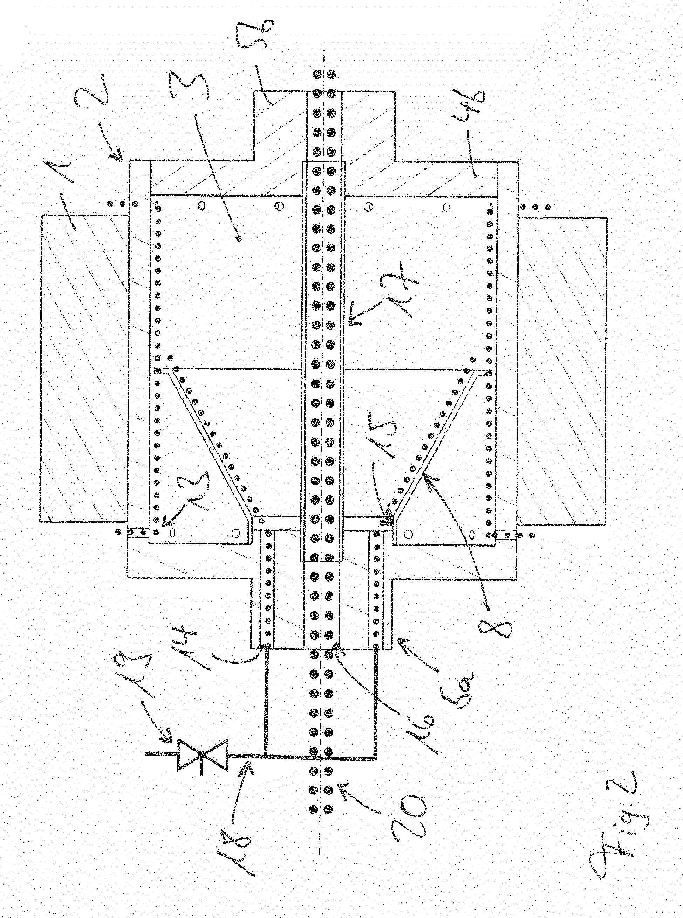

Der in Figur 2 gezeigte Rotor ist ähnlich aufgebaut. Es gelten dieselben Bezugszeichen für dieselben Teile. Im Gegensatz zur Ausführungsform nach Figur 1, weist dieser Rotor mehrere über den Umfang des Wellenzapfens 5a gleich verteilte Einlasskanäle 14 auf, die im Halsbereich 15 des Verteilelementes 8 münden. Die Einlasskanäle 14 werden über eine Zuleitung 18 mit Kühlflüssigkeit versorgt, wobei der Durchfluss durch die Zuleitung 18 über ein Ventil 19 einstellbar ist. Bei diesem Rotor ist in dem Wellenzapfen 5a zudem eine koaxiale Zugangsbohrung 16 vorgesehen, in die ein Durchleitungselement in Form eines Rohrstückes 17 gegen den Wellenhohlraum 3 abdichtend in eingepasst ist. Das Rohrstück 17 führt durch den umgebenden Wellenhohlraum 3 hindurch bis zum anderen Wellenzapfen 5b, wo es ebenfalls gegen den Wellenhohlraum 3 abdichtend eingepasst ist. Das Rohrstück 17 ermöglicht die separate Durchleitung eines flüssigen oder gasförmigen Mediums 20 (Punkte).

Über das Ventil 19, die Anzahl und den Durchmesser der Einlasskanäle 14 sowie die Anzahl und Durchmesser der Austrittsöffnungen 13 kann der Kühlmittelstrom und die vorhandene Kühlmittelmenge im Rotor eingestellt und folglich die Kühlleistung geregelt werden.

### Bezugszeichenliste

- 1: Blechpakete
- 2: Zylindermantel
- 3: Wellenhohlraum
- 4: Stirnflansche
- 5: Wellenzapfen
- 6: Einlass
- 7: Innenfläche des Zylindermantels
- 8: Verteilelement
- 9: Ableitfläche
- 10: Mündungsbereich
- 11: Distanzstücke
- 12: Hals
- 13: Austrittsöffnungen
- 14: Einlasskanäle
- 15: Halsbereich
- 16: Zugangsbohrung
- 17: Rohrstück
- 18: Zuleitung
- 19: Ventil
- 20: Medium

## Patentansprüche

1. Rotorhohlwelle für den Rotor einer elektrischen Maschine, aufweisend einen beidseitig von Stirnflanschen (4) abgeschlossenen Zylindermantel (2), der einen Wellenhohlraum (3) umgibt, wobei sich an den Stirnflanschen (4) jeweils ein Wellenzapfen (5) befindet und wobei in einem Stirnflansch insbesondere im Wellenzapfen (5) ein Einlass (6,14) vorgesehen ist, über den eine Kühlflüssigkeit in den Wellenhohlraum (3) und an die Innenfläche (7) des Zylindermantels (2) gelangt, wobei ein im Wellenhohlraum (3) angeordnetes Verteilelement (8), das die über den Einlass (6,14) eintretende Kühlflüssigkeit aufnimmt, über eine Ableitfläche (9) in Richtung der Innenfläche (7) des Zylindermantels (2) führt und über einen Mündungsbereich auf die Innenfläche (7) abgibt, wobei die Ableitfläche (9) des Verteilelementes (8) einen konischen Trichter mit glatter, gerader oder gewölbter, Innenfläche ausbildet, der sich mit einem Öffnungswinkel in den Wellenhohlraum (3) hinein öffnet,
wobei der Mündungsbereich der Ableitfläche (9) zur Innenfläche (7) des Zylindermantels (2) beabstandet ist, wobei der Abstand durch Distanzstücke (11) überbrückt ist, **dadurch gekennzeichnet, dass** die Distanzstücke (11) symmetrisch über den Umfang verteilt sind und an der Innenfläche (7) des Zylindermantels (2) anliegen, und wobei
der Mündungsbereich (10) sich etwa in der Mitte der axialen Ausdehnung der Innenfläche (7) befindet, wobei sich die an dieser Stelle abgegebene Kühlflüssigkeit bei drehender Rotorhohlwelle axial nach beiden Seiten nahezu homogen über die Innenfläche (7) verteilt.

2. Rotorhohlwelle nach Anspruch 1, **dadurch gekennzeichnet, dass** die Ableitfläche (9) des Verteilelementes (8) einen konischen Trichter mit gerader oder gewölbter Innenfläche ausbildet, der sich mit einem Öffnungswinkel in den Wellenhohlraum (3) hinein öffnet.

3. Rotorhohlwelle nach Anspruch 1 oder 2,
**dadurch gekennzeichnet,**
**dass** der Radius der Trichtermündung größer als die Hälfte des Innenradius des Zylindermantels (2) ist.

4. Rotorhohlwelle nach einem der vorherigen Ansprüche,
**dadurch gekennzeichnet,**
**dass** die Ableitfläche (9) aus dünnwandigem Material, insbesondere aus Kunststoff oder Blech, gefertigt ist, wobei die Distanzstücke (11) an den Mündungsbereich (10) angeformt sind.

5. Rotorhohlwelle nach einem der vorherigen Ansprüche,
**dadurch gekennzeichnet,**
**dass** der Einlass von mehreren auf dem Umfang des Wellenzapfens (5) gleich verteilter Einlasskanäle (4) gebildet wird, die im Halsbereich des Trichters münden.

6. Rotorhohlwelle nach einem der vorherigen Ansprüche,
**dadurch gekennzeichnet,**
**dass** in der Innenfläche (7) des Zylindermantels (2) Austrittsöffnungen (13) vorgesehen sind, aus denen die Kühlflüssigkeit bei drehender Rotorhohlwelle in radialer Richtung austritt, wobei die austretende Kühlflüssigkeit einen den Rotor umgebenden Stator benetzt.

7. Rotorhohlwelle nach Anspruch 6
**dadurch gekennzeichnet,**
**dass** die Austrittsöffnungen (13) in beiden Randbereichen des Zylindermantels (2) jeweils über den Umfang gleichverteilt vorgesehen sind.

8. Rotorhohlwelle nach Anspruch 6 oder 7,
**dadurch gekennzeichnet,**
**dass** die Austrittsöffnungen des einen Randbereiches gegenüber den Austrittsöffnungen des anderen Randbereiches über den Umfang versetzt insbesondere auf der Winkelhalbierenden angeordnet sind.

9. Rotor aufweisend eine mit Blechpaketen bestückte Rotorhohlwelle nach einem der vorherigen Ansprüche.

10. Elektrische Maschine, insbesondere Asynchronmotor oder permanent erregte Synchronmaschine, mit einem Rotor nach Anspruch 9.

## Claims

1. Rotor hollow shaft for the rotor of an electric machine, having a cylinder jacket (2) which is closed off on both sides by end flanges (4) and which surrounds a shaft cavity (3), wherein in each case one shaft journal (5) is situated on the end flanges (4), and wherein, in one end flange, in particular in the shaft journal (5), there is provided an inlet (6, 14) via which a cooling liquid passes into the shaft cavity (3) and to the inner surface (7) of the cylinder jacket (2), wherein a distributing element (8) which is arranged in the shaft cavity (3) receives the cooling liquid entering via the inlet (6, 14), guides said cooling liquid in the direction of the inner surface (7) of the cylinder jacket (2) via a diverting surface (9) and discharges said cooling liquid to the inner surface (7) via a mouth region, wherein the diverting surface (9) of the distributing element (8) forms a conical funnel which has a smooth, straight or curved inner surface and which opens into the shaft cavity (3) at an opening angle, wherein the mouth region of the diverting surface (9) is spaced apart from the inner surface (7) of the cylinder jacket (2), wherein the spacing is bridged by spacer pieces (11),
**characterized in that**
the spacer pieces (11) are distributed symmetrically over the circumference and lie against the inner surface (7) of the cylinder jacket (2), and wherein the mouth region (10) is situated approximately in the centre of the axial extent of the inner surface (7), wherein the cooling liquid discharged at this position, with rotating rotor hollow shaft, is distributed axially to both sides almost homogeneously over the inner surface (7).

2. Rotor hollow shaft according to Claim 1, **characterized in that** the diverting surface (9) of the distributing element (8) forms a conical funnel which has a straight or curved inner surface and which opens into the shaft cavity (3) at an opening angle.

3. Rotor hollow shaft according to Claim 1 or 2,
**characterized**
**in that** the radius of the funnel mouth is greater than half the inner radius of the cylinder jacket (2) .

4. Rotor hollow shaft according to one of the preceding claims,
**characterized**
**in that** the diverting surface (9) is manufactured from thin-walled material, in particular from plastic or sheet metal, wherein the spacer pieces (11) are integrally formed on the mouth region (10).

5. Rotor hollow shaft according to one of the preceding claims,
**characterized**
**in that** the inlet is formed by multiple inlet ducts (4) which are distributed evenly on the circumference of the shaft journal (5) and which open into the neck region of the funnel.

6. Rotor hollow shaft according to one of the preceding claims,
**characterized**
**in that**, in the inner surface (7) of the cylinder jacket (2), there are provided exit openings (13) from which the cooling liquid, with rotating rotor hollow shaft, exits in a radial direction, wherein the exiting cooling liquid wets a stator surrounding the rotor.

7. Rotor shaft according to Claim 6,
**characterized**
**in that** the exit openings (13) are provided in both boundary regions of the cylinder jacket (2), in each case so as to be evenly distributed over the circumference.

8. Rotor hollow shaft according to Claim 6 or 7,
**characterized**
**in that** the exit openings of one boundary region, in relation to the exit openings of the other boundary region, are arranged over the circumference in an offset manner, in particular on the angle bisectors.

9. Rotor having a rotor hollow shaft according to one of the preceding claims which is equipped with lamination stacks.

10. Electric machine, in particular asynchronous motor or permanently excited synchronous machine, having a rotor according to Claim 9.

## Revendications

1. Arbre creux de rotor pour le rotor d'une machine électrique, présentant une enveloppe cylindrique (2) terminée des deux côtés par des brides frontales (4), qui entoure une cavité d'arbre (3), un tourillon d'arbre (5) se trouvant à chaque fois au niveau des brides frontales (4) et une entrée (6, 14) étant prévue dans une bride frontale notamment dans le tourillon d'arbre (5), par le biais de laquelle un liquide de refroidissement parvient dans la cavité d'arbre (3) et au niveau de la surface intérieure (7) de l'enveloppe cylindrique (2), un élément répartiteur (8) disposé dans la cavité d'arbre (3), qui reçoit le liquide de refroidissement entrant par le biais de l'entrée (6, 14), conduisant par le biais d'une surface de dérivation (9) dans la direction de la surface intérieure (7) de l'enveloppe cylindrique (2) et donnant sur la surface intérieure (7) par le biais d'une région d'embouchure, la surface de dérivation (9) de l'élément répartiteur (8) constituant un entonnoir conique avec une surface intérieure lisse, droite ou courbe, qui s'ouvre avec un angle d'ouverture dans la cavité d'arbre (3),
la région d'embouchure de la surface de dérivation (9) étant espacée de la surface intérieure (7) de l'enveloppe cylindrique (2), la distance étant surmontée par des pièces d'espacement (11),
**caractérisé en ce que**
les pièces d'espacement (11) sont réparties symétriquement sur la périphérie et s'appliquent contre la surface intérieure (7) de l'enveloppe cylindrique (2) et
la région d'embouchure (10) se trouvant approximativement au milieu de l'étendue axiale de la surface intérieure (7), le liquide de refroidissement délivré à cet endroit se répartissant pratiquement de manière homogène sur la surface intérieure (7) axialement vers les deux côtés lorsque l'arbre creux de rotor tourne.

2. Arbre creux de rotor selon la revendication 1,
**caractérisé en ce que** la surface de dérivation (9) de l'élément répartiteur (8) constitue un entonnoir conique avec une surface intérieure droite ou courbe qui s'ouvre avec un angle d'ouverture dans la cavité d'arbre (3).

3. Arbre creux de rotor selon la revendication 1 ou 2,
**caractérisé en ce que**
le rayon de l'embouchure d'entonnoir est supérieur à la moitié du rayon intérieur de l'enveloppe cylindrique (2).

4. Arbre creux de rotor selon l'une quelconque des revendications précédentes,
**caractérisé en ce que**
la surface de dérivation (9) est fabriquée en matériau à parois minces, en particulier en plastique ou en tôle, les pièces d'espacement (11) étant façonnées au niveau de la région d'embouchure (10).

5. Arbre creux de rotor selon l'une quelconque des revendications précédentes,
**caractérisé en ce que**
l'entrée est formée par plusieurs canaux d'entrée (4) répartis uniformément sur la périphérie du tourillon d'arbre (5), qui débouchent dans la région de col de l'entonnoir.

6. Arbre creux de rotor selon l'une quelconque des revendications précédentes,
**caractérisé en ce que**
dans la surface intérieure (7) de l'enveloppe cylindrique (2) sont prévues des ouvertures de sortie (13) desquelles sort le liquide de refroidissement dans la direction radiale, lorsque l'arbre creux de rotor tourne, le liquide de refroidissement sortant mouillant un stator entourant le rotor.

7. Arbre creux de rotor selon la revendication 6,
**caractérisé en ce que**
les ouvertures de sortie (13) sont prévues à chaque fois de manière répartie uniformément sur la périphérie dans deux régions de bord de l'enveloppe cylindrique (2).

8. Arbre creux de rotor selon la revendication 6 ou 7,
**caractérisé en ce que**
les ouvertures de sortie de l'une des régions de bord sont disposées de manière décalée sur la périphérie par rapport aux ouvertures de sortie de l'autre région de bord, notamment sur la bissectrice.

9. Rotor présentant un arbre creux de rotor garni de paquets de tôles, selon l'une quelconque des revendications précédentes.

10. Machine électrique, en particulier moteur asynchrone ou machine synchrone à excitation permanente, comprenant un rotor selon la revendication 9.
